# EUROPEAN PATENT APPLICATION

(11) **EP 4 434 712 A1**
(43) Date of publication of application: **25.09.2024**
(21) Application number: 22894113.4
(22) Date of filing: 28.02.2022
(51) Int. Cl.: B29B 13/00, C08F 6/00, B29B 9/16

(54) **APPARATUS AND METHOD FOR REMOVING VOC IN POLYPROPYLENE BY MEANS OF STEAM METHOD AND DECREASING ODOR LEVEL**

(30) Priority: 17.11.2021 CN 202111362875
(71) Applicant: Tianhua Institute of Chemical Machinery and Automation Co., Ltd., Lanzhou, Gansu 730060 (CN)
(72) Inventor: ZHAO, Xu, Lanzhou, Gansu 730060 (CN); GAO, Yan, Lanzhou, Gansu 730060 (CN); LING, Yonggong, Lanzhou, Gansu 730060 (CN); ZHOU, Tao, Lanzhou, Gansu 730060 (CN); QIU, Yongning, Lanzhou, Gansu 730060 (CN); YANG, Shaohua, Lanzhou, Gansu 730060 (CN); MI, Chao, Lanzhou, Gansu 730060 (CN); DONG, Qingsheng, Lanzhou, Gansu 730060 (CN); ZHANG, Fan, Lanzhou, Gansu 730060 (CN); WANG, Xinxing, Lanzhou, Gansu 730060 (CN); MA, Kaixuan, Lanzhou, Gansu 730060 (CN); XIE, Xiaoling, Lanzhou, Gansu 730060 (CN)
(74) Representative: SSM Sandmair
(86) International application number: PCT/CN2022/078153
(87) International publication number: WO 2023/087567

(57) **Abstract**

The present invention relates to an apparatus and method for removing VOC in polypropylene by steaming process. The apparatus comprises: a cyclone separator, used for separating polypropylene particles and entraining gas from an upstream pneumatic system; a preheating tower, communicating with a discharge hole of the cyclone separator, a first steam inlet being provided on a tower body of the preheating tower, and a tail gas outlet being provided on top of the preheating tower; and a devolatilization tower, communicating with a discharge hole of the preheating tower, a second steam inlet being provided on a tower body of the devolatilization tower, a steam outlet being provided on top of the tower, and the steam outlet being communicating with the first steam inlet. Taking advantage of the low boiling point of water and weak interaction between water and non-polar polypropylene molecules, complete technologies for removing VOC from polypropylene particles by steaming process and reducing odor level have been developed.

## Description

### FIELD

The present invention relates to the technical field of polypropylene processing, and particularly to an apparatus and method for removing VOC from polypropylene and reducing odor level by steaming process.

### BACKGROUND

Polypropylene is developing rapidly abroad because of its excellent comprehensive performance and low production cost. Among the five major synthetic resins used for plastics in the world, the output of polypropylene accounts for about 1/4. Globally, the per capita consumption of polypropylene is about 9-10kg, and the per capita consumption of polypropylene in developed countries is 20-32kg. The production, processing, storage and transportation of polypropylene will lead to the generation of volatile organic compounds (VOC). According to a report from the US International Technology Assessment Center, VOC is one of the most grievous threats to human health in modern society. The air quality is directly related to people's health. The harm of VOC pollution to people's health has attracted the attention of the country, production enterprises and consumers.

In view of this situation, some foreign well-known enterprises and research institutions have made different degrees of research on low VOC polypropylene, and made some progress. In the field of polypropylene processing, the measures to reduce VOC and odor of polypropylene mainly include: (1) screen and use more effective stability additives. For example, selecting an additive system that has good compatibility with polypropylene or has synergistic effect itself can effectively reduce the VOC and odor of polypropylene because the stability can be achieved with low addition amount. (2) Optimize the processing technology. The residues in polypropylene can be removed to a certain extent by high-temperature extrusion pelletizing, vacuum pumping during extrusion, and high-temperature baking and drying of the pelletized particles. (3) Add components with good adsorption effect on low molecular residues. It is found that adding a certain amount of volcanic ash, zeolite molecular sieve and other inorganic porous materials can also eliminate VOC in polypropylene, although the effect is greatly affected by the specific surface, pore structure, surface structure, pore size and pore size distribution of such materials.

In view of the increasing requirements of users for food hygiene, health and safety, the existing foreign advanced technology cannot completely solve the VOC and odor problems of polypropylene products. Therefore, it is an inevitable trend to develop VOC removal technologies for polypropylene products.

### SUMMARY

One of the purposes of the present invention is to provide an apparatus for removing VOC from polypropylene and reducing odor level by steaming process. The apparatus can efficiently remove VOC from polypropylene materials, reduce the odor level, improve the quality of polypropylene materials, and promote the overall quality of the domestic polypropylene production industry.

One of the purposes of the present invention is further to provide a method for removing VOC from polypropylene and reducing odor level by steaming process. This method relies on the above apparatus for efficiently removing VOC from polypropylene and reducing odor level by steaming process. Its principle is to use low pressure (0~0.15MPa.g, where MPa.g refers to the pressure expressed by gauge pressure) saturated steam as heating and degassing medium in view of the high VOC content, strong odor and low softening point of polypropylene materials.

To achieve the purpose above, the present invention provides an apparatus for removing VOC from polypropylene and reducing odor level by steaming process, comprising:
a cyclone separator, used for separating polypropylene particles and entraining gas from an upstream pneumatic system;
a preheating tower, communicating with a discharge hole of the cyclone separator, a first steam inlet being provided on the tower body of the preheating tower, and a tail gas outlet being provided on the top of the preheating tower; and
a devolatilization tower, communicating with a discharge hole of the preheating tower, a second steam inlet being provided on the tower body of the devolatilization tower, a steam outlet being provided on the top of the tower, and the steam outlet being communicating with the first steam inlet.

The apparatus for removing VOC from polypropylene and reducing odor level by steaming process in the present invention further comprising:
a cooling tank, communicating with the discharge hole of the devolatilization tower, a cooling water inlet being provided on the cooling tank;
a centrifugal particle dryer, communicating with the discharge hole of the cooling tank;
a vibrating screen, communicating with the discharge hole of the centrifugal particle dryer;
a feed hopper, located below the vibrating screen; and
a filter cooler, communicating with the centrifugal particle dryer and the devolatilization tower.

According to the apparatus for removing VOC from polypropylene and reducing odor level by steaming process in the present invention, a first rotary valve and a second rotary valve in series are provided between the cyclone separator and the preheating tower; a third rotary valve is provided between the preheating tower and the devolatilization tower; a fourth rotary valve and a fifth rotary valve in series are provided between the devolatilization tower and the cooling tank, and an exhaust port is provided between the fourth rotary valve and the fifth rotary valve; a third steam inlet is also provided on the preheating tower, and the third steam inlet is communicating with the exhaust port..

According to the apparatus for removing VOC from polypropylene and reducing odor level by steaming process in the present invention,a particle delivery pump is provided between the cooling tank and the centrifugal particle dryer to deliver the mixture of polypropylene particle materials and water.

According to the apparatus for removing VOC from polypropylene and reducing odor level by steaming process in the present invention, the centrifugal particle dryer is provided with an exhaust port and an air suction port, and the exhaust port is connected to a centrifugal fan.

According to the apparatus for removing VOC from polypropylene and reducing odor level by steaming process in the present invention, steam condensate outlets are provided at the bottoms of the preheating tower and devolatilization tower, and the steam condensate outlets are installed with Johnson screens; the aperture of the Johnson screen is smaller than 0.5mm;
According to the apparatus for removing VOC from polypropylene and reducing odor level by steaming process in the present invention, the preheating tower and devolatilization tower are provided with weighing control system; the weighing control system of the preheating tower is communicating with the third rotary valve, and the weighing control system of the devolatilization tower is communicating with the fourth rotary valve.

According to the apparatus for removing VOC from polypropylene and reducing odor level by steaming process in the present invention, the cooling tank is also provided with an on-stream water replenishing port, and a stirrer is provided in the cooling tank.

According to the apparatus for removing VOC from polypropylene and reducing odor level by steaming process in the present invention, three or more layers of steam distributors are provided in the preheating tower, and the bottom of the preheating tower is provided with a harrow, which is connected to a motor and driven by the motor to move circularly in the vertical direction.

According to the apparatus for removing VOC from polypropylene and reducing odor level by steaming process in the present invention, three or more layers of steam distributors are provided in the devolatilization tower, and the bottom of the devolatilization tower is provided with a harrow, which is connected to a motor and driven by the motor to move circularly in the vertical direction.

According to the apparatus for removing VOC from polypropylene and reducing odor level by steaming process in the present invention, the vibrating screen is installed with a double-layer screen, and the vibrating screen is provided with a particle inlet, a particle outlet, a fine powder outlet and a large particle outlet; the particle outlet is connected to the feed hopper.

To achieve the above purpose, the present invention further provides a method for removing VOC from polypropylene and reducing odor level by steaming process, wherein using the apparatus according to claim 1, comprising the following steps:
feeding: the upstream polypropylene particles are conveyed to the cyclone separator through the upstream pneumatic conveying system for gas-solid separation, and the separated solid polypropylene particles are conveyed to the preheating tower; and
degassing: the preheating tower is filled with polypropylene particles, flowing from top to bottom, and hot steam is introduced into the preheating tower to contact with the polypropylene particles; the preheated materials are conveyed to the devolatilization tower; and LP steam is introduced into the devolatilization tower, and the polypropylene particles contact with the LP steam in the devolatilization tower for further heating and constant temperature devolatilization; the removed VOC is discharged into the preheating tower with the uncondensed steam to preheat the materials.

The method for removing VOC from polypropylene and reducing odor level by steaming process in the present invention further comprises the following steps:
particle cooling and conveying: the devolatilized polypropylene particles are fed to the cooling tank for cooling;
drying and screening: the cooled polypropylene particles are fed to the centrifugal particle dryer for drying, then conveyed to the vibrating screen for screening, and the qualified polypropylene particles are conveyed to the feed hopper; and
water treatment: the process water containing fine powder discharged from the devolatilization tower and the centrifugal particle dryer is filtered.

According to the method for removing VOC from polypropylene and reducing odor level by steaming process in the present invention, the temperature of hot steam flowing into the preheating tower is 100-105 °C, and the materials are preheated to 80-105 °C; after staying for 20~40min, the materials are input into the devolatilization tower, and the pressure in the preheating tower is 7.8~25kPa.

According to the method for removing VOC from polypropylene and reducing odor level by steaming process in the present invention, the steam temperature in the devolatilization tower is 106~127 °C ; polypropylene particles are heated to 106~125 °C for constant temperature devolatilization; the devolatilization time is 1~4h, preferably 1.2~3h; the pressure in the devolatilization tower is 25~150kPa, preferably 80~110kPa.

According to the method for removing VOC from polypropylene and reducing odor level by steaming process in the present invention, the polypropylene particles are cooled to 60-80 °C in the cooling tank.

According to the method for removing VOC from polypropylene and reducing odor level by steaming process in the present invention comprises the following steps:
the upstream polypropylene particles are conveyed to the cyclone separator through the upstream pneumatic conveying system for gas-solid separation, and the separated solid polypropylene particles are air-locked via the first rotary valve and the second rotary valve and conveyed to the preheating tower;
the preheating tower is filled with polypropylene particles, flowing from top to bottom, so as to contact with hot steam; the preheated particles are discharged from the discharge hole at the bottom, and conveyed to the devolatilization tower through the third rotary valve; VOC containing steam is discharged from the top of the preheating tower into the tail gas treatment section for incineration or mixed with nitrogen for cooling and then discharged to the flare system;
the LP steam is introduced into the devolatilization tower; polypropylene particles are stacked in a dense phase moving bed in the devolatilization tower and move slowly from top to bottom, so as to contact with the LP steam for further heating and constant temperature devolatilization; the excess steam is continuously discharged to the preheating tower through the pressure regulating valve on top of the devolatilization tower, and the condensate in the devolatilization tower and the preheating tower is discharged from the system during startup and operation;
the weighing control system of the preheating tower transmits a weight signal of the preheating tower to a variable speed gear of the third rotary valve, controls the discharge speed of the preheating tower by controlling the speed to keep the total amount of materials in the preheating tower constant, and the weighing control system of the devolatilization tower transmits a weight signal of the devolatilization tower to a variable speed gear of the fourth rotary valve, controls the discharge speed of the devolatilization tower by controlling the speed to keep the total amount of materials in the devolatilization tower constant;
the devolatilized polypropylene particles are discharged through the fourth rotary valve and the fifth rotary valve, and then fed to the cooling tank; the stirrer provided in the cooling tank ensures that the particles are evenly mixed with water and discharged from the discharge hole of the cooling tank after cooling, and are delivered to the centrifugal particle dryer through the particle delivery pump for drying and dehydration;
the polypropylene particles are fed to the centrifugal particle dryer for drying, in order to discharge the wet air therein under the suction of the centrifugal fan, thereby further reducing water content in the particles;
the dried polypropylene particles are conveyed to the vibrating screen, and the particles are separated into the fine powder and large particles through two layers of screens; the particles are discharged from the equipment through their respective discharge holes, and then conveyed to the feed hopper; and
the process water containing fine powder discharged from the devolatilization tower and the centrifugal particle dryer is filtered.

The beneficial effects of the present invention are as follows:

### (1) Use LP steam as VOC removal medium

In combination with the distribution characteristics of amorphous region and crystalline region of polypropylene resin changing with temperature, taking advantage of the low boiling point of water and weak interaction between water and non-polar polypropylene molecules, complete technologies for removing VOC from polypropylene particles by steaming process and reducing odor level have been developed. Steam can accelerate the thermal motion of macromolecular chains in the amorphous and transition regions of polypropylene particles, promote the enrichment of small micromolecular VOC wrapped in the amorphous and transition regions, and then precipitate VOC molecules under the driving force of concentration difference. At the same time, saturated steam has large latent heat and good heat transfer effect, which is also conducive to VOC diffusion and precipitation under fully heated conditions. The pressure of LP saturated steam is 25~150kPa.g, and the steam temperature within this pressure range can achieve the purpose of ideal deep removal of VOC from materials; if the steam pressure continues to increase, on the one hand, it is not conducive to the escape of VOC from the materials; on the other hand, as the pressure increases, the steam temperature is too high, which will lead to the softening deformation of polypropylene particles and the rise of the yellow index.

### (2) Use the preheating tower and the devolatilization tower in series for VOC removal

The advantages lie in that:
A: If the one-stage devolatilization tower is used for operation, most of the steam will be used for condensing the heated materials after the materials are fed to the tower, and a small amount of steam will be discharged with VOC gas. The amount of steam passing through the material layer is less, and the VOC carried by the steam is not sufficient, which will inevitably lead to unsatisfactory VOC removal effect.
B: Double-tower operation is adopted: the devolatilization tower is intended to fully contact steam with materials and discharge them from the equipment with VOC, and the preheating tower is intended to heat materials. After the steam is introduced into the devolatilization tower, as the materials have been preheated, only a small amount of steam condenses, and most of the steam passes through the material layer, is discharged from the devolatilization tower with VOC, and fed to the preheating tower to heat materials. The operating pressure of the devolatilization tower is about 25~150kPa. g, and the operating pressure of the preheating tower is about 7.8~25kPa.g. Finally, the discharged steam with VOC is discharged from the preheating tower at low discharge temperature, realizing the cascade utilization of steam and effectively reducing the steam energy loss.
C: The upstream of the preheating tower is the feed rotary valve of the pneumatic system. Reducing the operating pressure of the preheating tower and the operating pressure of the rotary valve, thus reducing the design difficulty of the rotary valve, the system is better sealed and steam loss is reduced..
D: When the material is discharged from the equipment from the bottom of the devolatilization tower, it will carry a small amount of steam, which can be introduced into the preheating tower to realize the secondary utilization of steam and further reduce the heat loss.

### (2) Hydraulic conveying of solid particles

The particles after VOC removal are conveyed hydraulically, which can eliminate the contact with oxygen. The safer system can avoid the contact of hot materials with air to generate new VOC. The vortex pump or disc pump is used to convey the solid-liquid mixture. The vortex pump or disc pump is a pump suitable for conveying materials containing solid particles. The spiral-flow type impeller is adopted. The impeller is of semi-open or open structure and is placed on one side of the spiral housing. The flow channel of the spiral housing in front of the impeller is free of any blockage, so it can convey fluids with various solids without blockage, and has good passing performance.

### (3) Drying materials with particle dryer and vibrating screen

The centrifugal particle dryer is a device specially used to remove the water droplets attached to the particle surface, which can reduce the particle moisture to ≤ 5 ‰ in combination with the vibrating screen, meeting the product technical requirements.

### (4) Tail gas emission process after devolatilization

The VOC containing steam discharged from the preheating tower cannot be directly discharged to the flare. If the tail gas is condensed through the heat exchanger, it will form a higher concentration of VOC gas. As the gas is used as the second release source, the explosion-proof areas need to be divided in the engineering design, and the safety design of the whole system needs to be improved. Therefore, nitrogen is added before the tail gas is condensed for cooling. In this way, nitrogen is used to replace steam to avoid the generation of dangerous gas. At the same time, the displaced tail gas can be directly discharged to the flare system, with simple process and high safety.

(5) Compared with the existing cooling process of removing fine powder from polypropylene particles, the advantages of using a filter cooler are: fine powder filtering and process water cooling are realized in one piece of equipment, replacing the traditional polypropylene fine powder filtering equipment and process water cooling equipment, filtering thoroughly, avoiding the possibility of fine powder entering the cooling equipment, and not blocking the heat exchange equipment. The floor space is small, and the filtered and cooled purified water can flow automatically to the water equipment by using the high head difference, without the need for water pump delivery.

(6) Compared with the method in "System for deeply removing VOC from polypropylene material and drying polypropylene material" (Patent No.: 2020 209583124), the present invention is not only suitable for intermittent working conditions, but also suitable for continuous working conditions, and can be used for treating large quantities of polypropylene materials, with simple operation. However, the method in Chinese Patent 2020209583124 is only suitable for small batch production process under intermittent working conditions.

(7) According to the method of the present invention, the polypropylene treatment capacity is 0.1-50 tons/hour, or even more. VOC content of polypropylene material to be treated is more than 300ppm, VOC of polypropylene material after treatment is less than 60ppm, and VOC can be further reduced to below 20ppm, meeting the product technical requirements.

(8) The investment and operation cost of the device is low, and the product quality is improved greatly, which can meet the requirements of European standards for automotive materials (VOC ≤ 80ppm).

### BRIEF DESCRIPTION OF THE DRAWINGS

Fig. 1 is a structural diagram of the apparatus for removing VOC from polypropylene and reducing odor level by steaming process in the embodiment of the present invention;
Fig. 2 is a flow block diagram of the method for removing VOC from polypropylene and reducing odor level by steaming process in the embodiment of the present invention.

### DETAILED DESCRIPTION

In order to make the purpose, technical solution and advantages of the present invention clearer, the drawings and embodiments are described in the following for further detailed description of the present invention. It should be understood that various embodiments described herein are merely used to explain the present invention rather than limit the present invention. The element symbols and/or letters may be reused in various embodiments of the present invention. The reuse is intended to simplify and clarify, and does not define the relationships between the embodiments and/or configurations discussed.

In the description of the present invention, it should be understood that the terms "up", "down", "left" and "right" indicate the orientation or position relationships based on the orientation and position relationships as shown in the drawings, which is only for the convenience of describing the structure and operation mode, rather than indicating or implying that the part referred to must have a specific orientation and operate in a specific orientation, so such description cannot be understood as a limitation of the present invention.

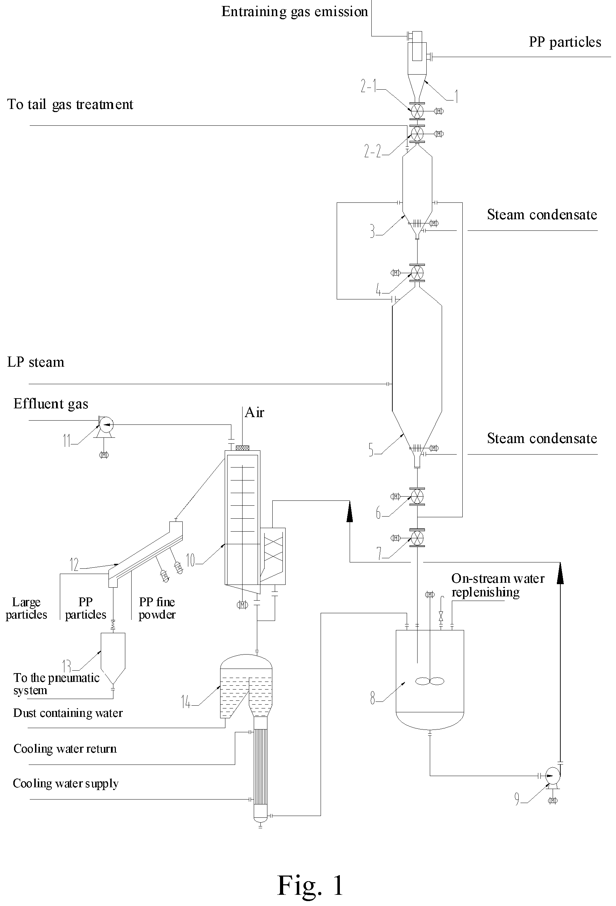

Referring to Fig. 1, the apparatus for removing VOC from polypropylene and reducing odor level by steaming process comprises: a cyclone separator1, used for separating polypropylene particles and entraining gas from an upstream pneumatic system; the cyclone separator 1 comprises a feed inlet, an exhaust outlet and a discharge hole. The feed inlet is connected to the pneumatic system through a pipeline, and the exhaust port discharges the conveying air to the downstream dedusting equipment; a preheating tower 3, communicating with a discharge hole of the cyclone separator 1, a first steam inlet being provided on the tower body of the preheating tower 3, and a tail gas outlet being provided on top of the preheating tower 3; a devolatilization tower 5, communicating with a discharge hole of the preheating tower 3, a second steam inlet being provided on a tower body of the devolatilization tower 5, a steam outlet being provided on top of the tower, and the steam outlet being communicating with the first steam inlet.

In specific use, the upstream polypropylene particles are conveyed to the cyclone separator 1 through the upstream pneumatic conveying system for gas-solid separation, and the separated solid polypropylene particles are conveyed to the preheating tower 3; the preheating tower 3 is filled with polypropylene particles, flowing from top to bottom, and hot steam is introduced into the preheating tower 3 to contact with the polypropylene particles; the preheated materials are conveyed to the devolatilization tower 5; LP steam is introduced into the devolatilization tower 5, and the polypropylene particles contact with the LP steam in the devolatilization tower 5 for further heating and constant temperature devolatilization; the removed VOC is discharged into the preheating tower 3 with the uncondensed steam to preheat the materials.

As a preferred embodiment, the apparatus further comprises: a cooling tank 8, communicating with a discharge hole of the devolatilization tower 5, a cooling water inlet being provided on the cooling tank 8; a centrifugal particle dryer 10, communicating with a discharge hole of the cooling tank 8; a vibrating screen 12, communicating with a discharge hole of the centrifugal particle dryer 10; a feed hopper 13, located below the vibrating screen 12, its inlet being connected to the discharge hole of the vibrating screen 12 through a pipeline, and its outlet being connected to the downstream pneumatic system; a filter cooler 14, communicating with the centrifugal particle dryer 10 and the devolatilization tower 5.

As a preferred embodiment, a first rotary valve 2-1 and a second rotary valve 2-2 in series are provided between the cyclone separator 1 and the preheating tower 3; a third rotary valve 4 is provided between the preheating tower 3 and the devolatilization tower 5; the third rotary valve 4 is connected to the discharge hole of the preheating tower 3 and the feed inlet of the devolatilization tower 5, which is used to lock steam and convey solid particles to prevent a large amount of steam in the devolatilization tower 5 from entering the preheating tower 3 through the third rotary valve 4, and simultaneously convey the particle materials into the downstream devolatilization tower 5; A fourth rotary valve 6 and a fifth rotary valve 7 in series are provided between the devolatilization tower 5 and the cooling tank 8. Two-stage rotary valves (the fourth rotary valve 6 and the fifth rotary valve 7) are used in series, which are used to lock steam and convey solid particles to prevent steam in the devolatilization tower 5 upstream of the fourth rotary valve 6 from entering the downstream cooling tank 8, and simultaneously convey polypropylene materials to the downstream. The inlet of the fourth rotary valve 6 is connected to the discharge hole of the devolatilization tower 5, and the outlet of the fifth rotary valve 7 is connected to the feed inlet of the downstream cooling tank 8. An exhaust port is provided between the fourth rotary valve 6 and the fifth rotary valve 7, which is used to discharge a small amount of steam carried in the process of conveying materials. The preheating tower 3 is also provided with a third steam inlet, which is communicating with the exhaust port.

Two-stage rotary valves (the first rotary valve 2-1 and the second rotary valve 2-2) are used in series between cyclone separator 1 and preheating tower 3 to lock steam and convey solid particles to prevent steam in the preheating tower 3 downstream of the rotary valve from entering the cyclone separator 1, and simultaneously convey polypropylene materials to the downstream. The inlet of the first rotary valve 2-1 is connected to the discharge hole of the cyclone separator 1, and the outlet of the second rotary valve 2-2 is connected to the feed inlet of the downstream preheating tower 3.

The discharge hole of the preheating tower 3 is connected to the third rotary valve 4 downstream. Three or more layers of steam distributors are designed inside the tower. Polypropylene materials are filled in the preheating tower. The tower body of the preheating tower 3 is provided with two steam inlets, a first steam inlet and a third steam inlet. The first steam inlet is connected to the steam outlet from the downstream devolatilization tower 5 through a pipeline, and the third steam inlet is connected to the fourth rotary valve 6, the exhaust port in the middle of the fifth rotary valve 7 through a pipeline; the steam enters the steam distributor of the preheating tower 3 from the steam inlet on the tower body of the preheating tower 3, and is uniformly distributed in the tower to directly contact with polypropylene particles for heat exchange. The bottom of the preheating tower 3 is provided with a harrow, which is driven by a motor to move circularly in vertical and reverse direction, so as to prevent the polypropylene particles from bridging in the discharge hole at the bottom of the tower and help the particle materials discharge smoothly. A steam condensate outlet is provided at the bottom of the preheating tower 3, and the steam condensate outlet is installed with a Johnson screen (aperture < 0.5mm), which is used to discharge the steam condensate condensed by steam heat exchange from the preheating tower 3 and prevent the discharge of particle materials. The top of the preheating tower is provided with a tail gas outlet, which will discharge a small amount of steam with VOC from the system.

The discharge hole of the devolatilization tower 5 is connected to the fourth rotary valve 6. Three or more layers of steam distributors are designed inside the tower. Polypropylene materials are filled in the devolatilization tower 5. The tower body of the devolatilization tower 5 is provided with a steam inlet. The steam inlet is connected to the LP steam from the utility system through a pipeline. The steam enters the steam distributor inside the tower from the steam inlet on the devolatilization tower 5, and is uniformly dispersed in the tower to directly contact with polypropylene particles for heat exchange. The bottom of the devolatilization tower 5 is provided with a harrow, which is driven by a motor to move circularly in vertical and reverse direction, so as to prevent the polypropylene particles from bridging in the discharge hole at the bottom of the tower and help the particle materials discharge smoothly. The top of the devolatilization tower is provided with a steam outlet, and most of the uncondensed steam is discharged from the steam outlet and connected to the steam inlet of the preheating tower 3 through a pipeline. A steam condensate outlet is provided at the bottom of the devolatilization tower 5, and the steam condensate outlet is installed with a Johnson screen (aperture < 0.5mm), which is used to discharge the steam condensate condensed by steam heat exchange from the preheating tower 3 and prevent the discharge of particle materials.

The feed inlet of the cooling tank 8 is connected to the outlet of the fifth rotary valve 7 through a pipeline. The cooling tank 8 is provided with a cooling process water inlet. The process water inlet is connected to the process water outlet from the filter cooler 14 through a pipeline. The process water and particle materials enter the cooling tank 8 and are uniformly mixed under the action of the stirrer, and are discharged through the discharge hole of the cooling tank 8. At the same time, the top of the cooling tank 8 is also provided with a on-stream water replenishing port for on-stream cooling water make-up.

The centrifugal particle dryer 10 is a device specially used to remove the water droplets attached to the particle surface, which is mainly used for dehydration by centrifugal force field and particle bounce impact. Under the action of centrifugal force, the water droplets from dehydration flow from the screen mesh hole into the annular water channel between the cylinder and the screen mesh, and then are discharged from the drainage outlet into the downstream filter cooler 14. At the same time, in order to increase the drying effect, the equipment is provided with an exhaust port and an air suction port. The air suction port is provided with a dust removal screen to prevent impurities from entering the dryer with air. The exhaust port is connected to the centrifugal fan 11 through a pipeline. Under the suction of centrifugal fan 11, the internal wet air is discharged to further reduce the particle water content. The centrifugal particle dryer 10 is simultaneously provided with a particle outlet.

The vibrating screen 12 is used to separate a small amount of fine powder carried in the particle materials through the vibrating screen. The vibrating screen 12 is installed with a double-layer screen, and the meshes can be selected as the case may be, for example, can be 4 meshes and 8 meshes. The vibrating screen 12 is provided with a particle inlet, a particle outlet, a fine powder outlet and a large particle outlet. The particle inlet is connected to the particle outlet of the particle dryer 10 through a pipeline, and the particle outlet is connected to the feed hopper 13 through a pipeline; the fine powder outlet discharges the screened fine powder from the vibrating screen 12. The large particle outlet is used to discharge abnormal large particle size particles brought into the vibrating screen 12 from the vibrating screen 12.

The filter cooler 14 is used to separate the fine powder generated during the system devolatilization and drying process from the process water and cool the process water.

As a preferred embodiment, a particle delivery pump 9 is provided between the cooling tank 8 and the centrifugal particle dryer 10 to deliver the mixture of polypropylene particle materials and water. The discharge hole of the cooling tank 8 is connected to the particle delivery pump 9 through a pipeline. The outlet of the particle delivery pump 9 is connected to the inlet of the centrifugal particle dryer 10. The delivery pump can be a vortex pump or disc pump. Without specific designation, it is only necessary to realize material conveying. Specifically, the products of Dalian Htech Pump Industry Co., Ltd., Kunming Jiahe Science & Technology Co., Ltd. and Shanghai Denai Pump Industry Co., Ltd. can be selected.

As a preferred embodiment, the preheating tower 3 and devolatilization tower 5 are provided with weighing control system; the weighing control system of the preheating tower 3 is communicating with the third rotary valve 4, and the weighing control system of the devolatilization tower 5 is communicating with the fourth rotary valve 6.

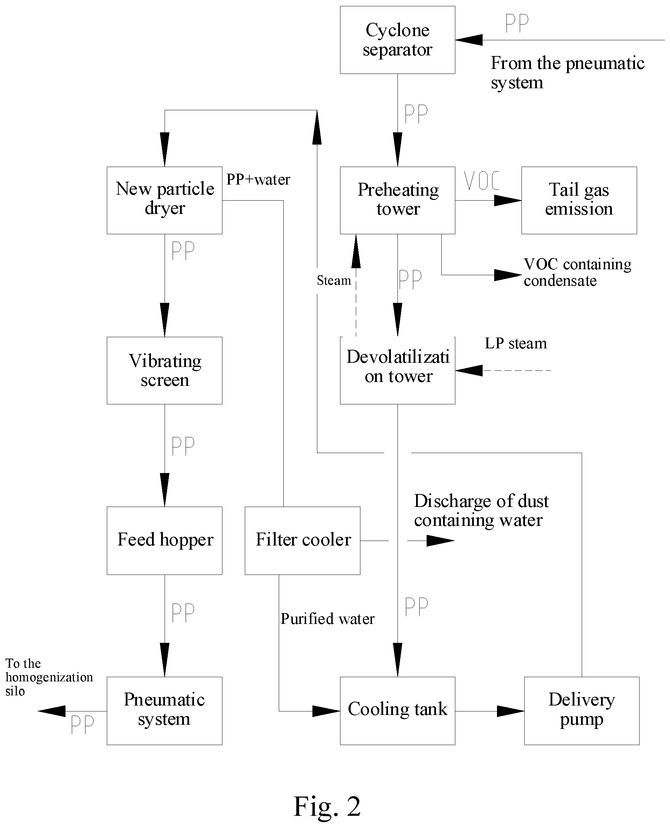

Referring to Fig. 2, the method for removing VOC from polypropylene and reducing odor level by steaming process in the present invention comprises the following steps:
(1) feeding procedure: the upstream polypropylene particles are conveyed to the cyclone separator 1 through the upstream pneumatic conveying system for gas-solid separation, and the separated solid polypropylene particles are air-locked via the first rotary valve 2-1 and the second rotary valve 2-2 and conveyed to the preheating tower 3;
(2) degassing procedure: the preheating tower 3 is filled with polypropylene particles, flowing from top to bottom. They directly contact the steam from the devolatilization tower 5 with a temperature of about 100-105 °C. The materials are preheated to about 100 °C and then discharged from the discharge hole at the bottom of the tower. They contact with polypropylene particles. The materials are preheated and then conveyed to the devolatilization tower 5. The 106~127°C steam is introduced into the devolatilization tower 5, and materials directly contact with steam for further heating to nearly 120 °C for constant temperature devolatilization. Polypropylene particles are stacked in a dense phase moving bed in the tower and move slowly from top to bottom to ensure a certain retention time. The retention time in the preheating tower 3 is about 30min, and the retention time in the devolatilization tower 5 is about 1-4h, preferably 1.2-3h. The control pressure in the devolatilization tower 5 is about 25~150kPa.g, preferably 80~110kPa.g. The excess steam is continuously discharged to the preheating tower 3 through the tower top pressure regulating valve, and the control pressure of the preheating tower 3 is about 7.8~25kPa.g. The steam condensate outlet at the bottom of the preheating tower 3 and devolatilization tower 5 can discharge the condensate in the tower from the system during startup and operation.

The VOC containing steam discharged from the top of the preheating tower 3 can be fed to the tail gas treatment section for incineration, or mixed with nitrogen for cooling and then discharged to the flare system.

The preheating tower 3 and devolatilization tower 5 are provided with a weighing control system, through which the weight signals of the preheating tower 3 and devolatilization tower 5 are transmitted in real time to the variable speed gears of the third rotary valve 4 and the fourth rotary valve 6 at the bottom of the corresponding tower to control the rotation speed of the rotary valve, so as to control the discharging speed of the preheating tower 3 and devolatilization tower 5 and keep the total amount of materials in the tower constant.

(3) particle cooling and conveying procedure: the devolatilized polypropylene particles are discharged through the fourth rotary valve 6 and the fifth rotary valve 7, and then enter the cooling tank 8. The cooling process water from the filter cooler 14 also enters the cooling tank 8 through gravity flow. The cooling tank 8 is provided with a stirrer to ensure that the particle material and water are uniformly mixed and cooled to 60-80 °C , and then discharged from the discharge hole of the cooling tank 8, and fed to the centrifugal particle dryer 10 through the particle delivery pump 9 for drying and dehydration.

(4) drying and screening procedure: when the particles enter the centrifugal particle dryer 10 to contact with the obliquely segmented blades and be thrown up spirally, forming a zigzag irregular movement path between the rotor and the screen, and at the same time, the particles beat and collide in the space between the screen and the rotor at a certain frequency. Under the action of centrifugal force, the water droplets from dehydration flow from the screen mesh hole into the annular water channel between the cylinder and the screen mesh, and then are discharged from the drainage outlet into the downstream filter cooler 14. At the same time, in order to increase the drying effect, the equipment is provided with an exhaust port and an air suction port. The exhaust port is connected to the centrifugal fan 11 through a pipeline. Under the suction of centrifugal fan 11, the internal wet air is discharged to further reduce the particle water content. The hot polypropylene particle materials enter the feed inlet of the vibrating screen 12 evenly from the discharge hole of the centrifugal particle dryer 10. Under the excitation force of the vibrating motor, they are screened while bouncing towards the discharge hole. The particle materials are separated from the fine powder and large particles through two layers of screens, and are discharged from the equipment through their respective discharge holes. The materials are further cooled and dried in the vibrating screen 12, and the water is further dried by using its own heat. The water content of the discharged material is ≤ 5‰. The qualified polypropylene particles after screening are discharged into the feed hopper 13 through the discharge hole of the vibrating screen 12, and then fed to the homogenization silo through the downstream pneumatic system.

The process water discharged from the drainage outlet of the centrifugal particle dryer 10 enters the filter cooler 14 to separate the conveying water and dust. The filter cooler 14 is designed with two chambers, one of which is a water purification chamber with a slender structure, and with a heat exchanger at the bottom, and the other is a fine powder discharge chamber. The process water entering the filter cooler 14 from the centrifugal particle dryer 10 falls into the water purification chamber, and the fine powder floats on the water surface and overflows to the fine powder discharge chamber by taking advantage of the density difference between the fine powder and the water. The dust containing water in the fine powder discharge chamber is regularly discharged from the equipment. The process water without fine powder in the water purification chamber returns to the cooling water tank 8 through gravity flow to mix with the particle materials for recycling.

The present invention provides a system and method for efficiently removing VOC from polypropylene and reducing odor level by steaming process, and the raw materials to be treated are gaseous polypropylene materials, which are also suitable for granular polypropylene materials produced by other processes and methods.

The above descriptions are only illustrative embodiments of the invention, not limitation to the invention in other forms. Any skilled in the art may make modifications or variations using the disclosed technical contents to be equivalent embodiments of equivalent changes applied to other fields, but any simple modifications, equivalent changes and variations to the above embodiments according to the technical essence of the invention without departing from the technical solution of the invention still belong to the scope protected by the technical solution of the invention.

## Claims

1. An apparatus for removing VOC from polypropylene and reducing odor level by steaming process, wherein comprising:
a cyclone separator, used for separating polypropylene particles and entraining gas from an upstream pneumatic system;
a preheating tower, communicating with a discharge hole of the cyclone separator, a first steam inlet being provided on the tower body of the preheating tower, and a tail gas outlet being provided on the top of the preheating tower; and
a devolatilization tower, communicating with a discharge hole of the preheating tower, a second steam inlet being provided on the tower body of the devolatilization tower, a steam outlet being provided on the top of the tower, and the steam outlet being communicating with the first steam inlet.

2. The apparatus for removing VOC from polypropylene and reducing odor level by steaming process according to claim 1, wherein further comprising:
a cooling tank, communicating with the discharge hole of the devolatilization tower, a cooling water inlet being provided on the cooling tank;
a centrifugal particle dryer, communicating with the discharge hole of the cooling tank;
a vibrating screen, communicating with the discharge hole of the centrifugal particle dryer;
a feed hopper, located below the vibrating screen; and
a filter cooler, communicating with the centrifugal particle dryer and the devolatilization tower.

3. The apparatus for removing VOC from polypropylene and reducing odor level by steaming process according to claim 2, wherein a first rotary valve and a second rotary valve in series are provided between the cyclone separator and the preheating tower; a third rotary valve is provided between the preheating tower and the devolatilization tower; a fourth rotary valve and a fifth rotary valve in series are provided between the devolatilization tower and the cooling tank, and an exhaust port is provided between the fourth rotary valve and the fifth rotary valve; a third steam inlet is also provided on the preheating tower, and the third steam inlet is communicating with the exhaust port.

4. The apparatus for removing VOC from polypropylene and reducing odor level by steaming process according to claim 2, wherein a particle delivery pump is provided between the cooling tank and the centrifugal particle dryer to deliver the mixture of polypropylene particle materials and water.

5. The apparatus for removing VOC from polypropylene and reducing odor level by steaming process according to claim 1, wherein the centrifugal particle dryer is provided with an exhaust port and an air suction port, and the exhaust port is connected to a centrifugal fan.

6. The apparatus for removing VOC from polypropylene and reducing odor level by steaming process according to claim 1, wherein steam condensate outlets are provided at the bottoms of the preheating tower and devolatilization tower, and the steam condensate outlets are installed with Johnson screens; the aperture of the Johnson screen is smaller than 0.5mm.

7. The apparatus for removing VOC from polypropylene and reducing odor level by steaming process according to claim 3, wherein the preheating tower and devolatilization tower are provided with weighing control system; the weighing control system of the preheating tower is communicating with the third rotary valve, and the weighing control system of the devolatilization tower is communicating with the fourth rotary valve.

8. The apparatus for removing VOC from polypropylene and reducing odor level by steaming process according to claim 2, wherein the cooling tank is also provided with an on-stream water replenishing port, and a stirrer is provided in the cooling tank.

9. The apparatus for removing VOC from polypropylene and reducing odor level by steaming process according to claim 1, wherein three or more layers of steam distributors are provided in the preheating tower, and the bottom of the preheating tower is provided with a harrow, which is connected to a motor and driven by the motor to move circularly in the vertical direction.

10. The apparatus for removing VOC from polypropylene and reducing odor level by steaming process according to claim 1, wherein three or more layers of steam distributors are provided in the devolatilization tower, and the bottom of the devolatilization tower is provided with a harrow, which is connected to a motor and driven by the motor to move circularly in the vertical direction.

11. The apparatus for removing VOC from polypropylene and reducing odor level by steaming process according to claim 2, wherein the vibrating screen is installed with a double-layer screen, and the vibrating screen is provided with a particle inlet, a particle outlet, a fine powder outlet and a large particle outlet; the particle outlet is connected to the feed hopper.

12. A method for removing VOC from polypropylene and reducing odor level by steaming process, wherein using the apparatus according to any of claims 1-11, comprising the following steps:
feeding: the upstream polypropylene particles are conveyed to the cyclone separator through the upstream pneumatic conveying system for gas-solid separation, and the separated solid polypropylene particles are conveyed to the preheating tower; and
degassing: the preheating tower is filled with polypropylene particles, flowing from top to bottom, and hot steam is introduced into the preheating tower to contact with the polypropylene particles; the preheated materials are conveyed to the devolatilization tower; and LP steam is introduced into the devolatilization tower, and the polypropylene particles contact with the LP steam in the devolatilization tower for further heating and constant temperature devolatilization; the removed VOC is discharged into the preheating tower with the uncondensed steam to preheat the materials.

13. The method for removing VOC from polypropylene and reducing odor level by steaming process according to claim 12, wherein further comprising the following steps:
particle cooling and conveying: the devolatilized polypropylene particles are fed to the cooling tank for cooling;
drying and screening: the cooled polypropylene particles are fed to the centrifugal particle dryer for drying, then conveyed to the vibrating screen for screening, and the qualified polypropylene particles are conveyed to the feed hopper; and
water treatment: the process water containing fine powder discharged from the devolatilization tower and the centrifugal particle dryer is filtered.

14. The method for removing VOC from polypropylene and reducing odor level by steaming process according to claim 12, wherein the temperature of hot steam flowing into the preheating tower is 100~105°C, and the materials are preheated to 80~105°C; after staying for 20~40min, the materials are input into the devolatilization tower, and the pressure in the preheating tower is 7.8~25kPa.

15. The method for removing VOC from polypropylene and reducing odor level by steaming process according to claim 12, wherein the steam temperature in the devolatilization tower is 106~127°C; polypropylene particles are heated to 106-125 °C for constant temperature devolatilization; the devolatilization time is 1~4h, preferably 1.2~3h; the pressure in the devolatilization tower is 25~150kPa, preferably 80~110kPa.

16. The method for removing VOC from polypropylene and reducing odor level by steaming process according to claim 13, wherein the polypropylene particles are cooled to 60-80 °C in the cooling tank.

17. The method for removing VOC from polypropylene and reducing odor level by steaming process according to claim 13, wherein comprising the following steps:
the upstream polypropylene particles are conveyed to the cyclone separator through the upstream pneumatic conveying system for gas-solid separation, and the separated solid polypropylene particles are air-locked via the first rotary valve and the second rotary valve and conveyed to the preheating tower;
the preheating tower is filled with polypropylene particles, flowing from top to bottom, so as to contact with hot steam; the preheated particles are discharged from the discharge hole at the bottom, and conveyed to the devolatilization tower through the third rotary valve; VOC containing steam is discharged from the top of the preheating tower into the tail gas treatment section for incineration or mixed with nitrogen for cooling and then discharged to the flare system;
the LP steam is introduced into the devolatilization tower; polypropylene particles are stacked in a dense phase moving bed in the devolatilization tower and move slowly from top to bottom, so as to contact with the LP steam for further heating and constant temperature devolatilization; the excess steam is continuously discharged to the preheating tower through the pressure regulating valve on top of the devolatilization tower, and the condensate in the devolatilization tower and the preheating tower is discharged from the system during startup and operation;
the weighing control system of the preheating tower transmits a weight signal of the preheating tower to a variable speed gear of the third rotary valve, controls the discharge speed of the preheating tower by controlling the speed to keep the total amount of materials in the preheating tower constant, and the weighing control system of the devolatilization tower transmits a weight signal of the devolatilization tower to a variable speed gear of the fourth rotary valve, controls the discharge speed of the devolatilization tower by controlling the speed to keep the total amount of materials in the devolatilization tower constant;
the devolatilized polypropylene particles are discharged through the fourth rotary valve and the fifth rotary valve, and then fed to the cooling tank; the stirrer provided in the cooling tank ensures that the particles are evenly mixed with water and discharged from the discharge hole of the cooling tank after cooling, and are delivered to the centrifugal particle dryer through the particle delivery pump for drying and dehydration;
the polypropylene particles are fed to the centrifugal particle dryer for drying, in order to discharge the wet air therein under the suction of the centrifugal fan, thereby further reducing water content in the particles;
the dried polypropylene particles are conveyed to the vibrating screen, and the particles are separated into the fine powder and large particles through two layers of screens; the particles are discharged from the equipment through their respective discharge holes, and then conveyed to the feed hopper; and
the process water containing fine powder discharged from the devolatilization tower and the centrifugal particle dryer is filtered.
